# EUROPÄISCHE PATENTANMELDUNG

(11) **EP 2 256 962 A1**
(43) Veröffentlichungstag der Anmeldung: **01.12.2010**
(21) Anmeldenummer: 10004647.3
(22) Anmeldetag: 03.05.2010
(51) Int. Cl.: H04H 40/90, H04H 20/63, H04N 7/10, H04N 7/20

(54) **System zur Verteilung von Telekommunikationssignalen**

(30) Priorität: 26.05.2009 ES 200901325
(71) Anmelder: TELEVES, S.A., 15706 Santiago de Compostela (ES)
(72) Erfinder: Sequeira Peixoto, Luis Antonio, 4740-364 Fao Esposende (PT)
(74) Vertreter: Dosterschill, Peter

(57) **Zusammenfassung**

Die Erfindung betrifft ein System zur Verteilung von Telekommunikationssignalen, insbesondere Fernseh-, Rundfunk- und/oder Datensignalen, bestehend aus einer Schaltung (CA) mit n Eingängen (I1 ...In), die mit Telekommunikationsnetzen, insbesondere über Antennen und/oder Kabeln verbunden sind, und mit m Ausgängen (O1 ...Om), an die Signalempfangsgeräte anschließbar sind, insbesondere Fernseh-, Rundfunk-und/oder Datenempfangsgeräte, wobei jeder Ausgang (O1 ... Om) mindestens einem Schaltungselement (S11,,, S1n ...Sm1...Smn) zugeordnet ist.

Erfindungsgemäß ist vorgesehen, dass die Schaltungselemente (S11...S1n-...Sm1...Smn) in der Weise ausgestaltet sind, dass sie aus an den Eingängen (11...In) anliegenden Telekommunikationssignalen ausgangsindividuell mindestens ein Telekommunikationssignal für einen Ausgang oder mehrere Ausgänge (O1 ... Om) auswählen und das mindestens eine ausgewählte Telekommunikationssignal dem entsprechenden Ausgang oder Ausgängen (O1...Om) zuführen.

## Beschreibung

Die Erfindung betrifft ein System zur Verteilung von Telekommunikationssignalen nach dem Oberbegriff des Anspruchs 1.

Es sind verschiedene Systeme zur Verteilung von Telekommunikationssignalen an unterschiedliche Endbenutzer bekannt, die an ein Netz angeschlossen sind. In vielen Fällen besteht dabei zum einen das Problem, dass zu jedem Benutzer eine Vielzahl von Kabeln zu verlegen ist, die unterschiedliche Telekommunikationssignale (Dienste) übertragen, wobei der Benutzer den oder die Dienste (Telekommunikationssignale) auszuwählen hat, die jeweils gerade gewünscht werden. Zum anderen haben Diensteanbieter in Abhängigkeit der jeweiligen Dienste, die der Kunde abonniert und abruft, die Telekommunikationssignale (Dienste) auszuwählen, die dem Benutzer zuzuführen sind. Die bekannten, im Markt verfügbaren Lösungen bieten lediglich die Möglichkeit, einen einzigen Dienst (Telekommunikationssignat) aus den möglichen an den Ort des Benutzers übertragenen Signalen für den Benutzer auszuwählen.

Der vorliegenden Erfindung liegt die Aufgabe zugrunde, ein System der eingangs genannten Art zu schaffen, das dem Benutzer erweiterte Nutzungsmöglichkeiten bietet.

Diese Aufgabe wird durch ein System gelöst, das in den Ansprüchen definiert ist.

Die Erfindung zeichnet sich durch eine Vielzahl von Vorteilen aus.

Das erfindungsgemäße System zur Verteilung von Telekommunikationssignalen, insbesondere Fernseh-, Rundfunk- und/oder Datensignalen, besteht aus einer Schaltung mit n Eingängen, die über Verbindungselemente mit Telekommunikationsnetzen, insbesondere über Antennen und/oder Kabeln verbunden sind. Die Schaltung hat m Ausgänge, an die Signalempfangsgeräte anschließbar sind, insbesondere Fernseh-, Rundfunk- und/oder Datenempfangsgeräte. Jedem Ausgang ist mindestens einem Schaltungselement zugeordnet.

Das oder die Schaltungselemente ist bzw. sind in der Weise ausgestaltet, dass sie aus an den Eingängen anliegenden Telekommunikationssignalen mindestens ein Telekommunikationssignal für einen Ausgang oder mehrere Ausgänge ausgangsindividuell auswählen, wobei das mindestens eine ausgewählte Telekommunikationssignal dem entsprechenden Ausgang oder den entsprechenden Ausgängen (O1...Om), für die die Auwahl vorgenommen wurde, zugeführt wird.

Damit erhält der Benutzer die Möglichkeit, ein, mehrere oder alle Signale, die am Eingang der Schaltung anliegen, auszuwählen.

Eine weitere vorteilhafte Ausführungsform des erfindungsgemäßen Systems ist **dadurch gekennzeichnet, dass** jedes Schanungselement mindestens einen Mischer und mindestens einen Schalter aufweist. Der Benutzer kann damit ausgangsindividuell ein Paket mehrerer, eingangsseitiger Signale auswählen.

Eine weitere vorteilhafte Ausführungsform des erfindungsgemäßen Systems ist **dadurch gekennzeichnet, dass** mindestens ein Teil der Schaltungselemente in einem Gehäuse angeordnet ist, in dem eine Platine der Schaltung angeordnet ist. Durch die Anordnung des Systems in einem geschlossenen Gehäuse wird der körperliche Zugang zu dem System bevollmächtigtem Personal vorbehalten, das die Schalter betätigen darf, damit beliebige Eingangssignale vorgebbaren Ausgängen zuordnen kann.

Eine weitere vorteilhafte Ausführungsform des erfindungsgemäßen Systems ist **dadurch gekennzeichnet, dass** die Schaltungselemente außerhalb eines Gehäuses angeordnet sind, in dem eine Platine der Schaltung angeordnet ist. Dies ist mit dem Vorteil verbunden, dass für einen Benutzer, für den die Schaltungselemente außerhalb des Gehäuses angeordnet sind, die Schalter in einfacher Weise zugänglich sind, und ihm damit die Möglichkeit geboten wird, alle Eingangssignale (Dienste) in einfacher Weise auszuwählen.

Eine weitere vorteilhafte Ausführungsform des erfindungsgemäßen Systems ist **dadurch gekennzeichnet, dass** wenigstens ein Teil der Schalter manuell betätigbar ist. Damit ist das System hinsichtlich seiner Hard- und Softwarestruktur in einfacher Weise ausgestaltet.

Eine weitere vorteilhafte Ausführungsform des erfindungsgemäßen Systems ist **dadurch gekennzeichnet, dass** wenigstens ein Teil der Schalter durch Signale aus den Telekommunikationsnetzen und/oder durch Fernbedienungsgeber steuerbar ist.

Diese bietet Diensteanbietern die einfache Möglichkeit, vorgegebene Dienste vorgebbaren Benutzern zuzuordnen, solche Dienste zu modifizieren, zu ergänzen bzw. zu reduzieren, ohne dass Personal vor Ort Zugang zu dem System haben muss.

Eine weitere vorteilhafte Ausführungsform des erfindungsgemäßen Systems ist **dadurch gekennzeichnet, dass** mindestens ein Teil der Schaltungselemente in Steckdosen integriert ist, die zwischen dem Gehäuse (CAJ) und den Signalempfangsgeräten angeordnet sind, Damit sind die Schaltungselemente mit den Schaltern für den Benutzer räumlich nahe, sozusagen in Reichweite angeordnet.

Zum besseren Verständnis der Erfindung wird nun beispielhaft ein erfindungsgemäßes System anhand der Zeichnung beschrieben.

Es zeigt
- Figur 1: ein erfindungsgemäßes System,
- Figur 2: ein Gehäuse, in welchem ein erfindungsgemäßes System angeordnet ist, und
- Figur 3: eine Schaltungsanordnung des erfindungsgemäßen Systems.

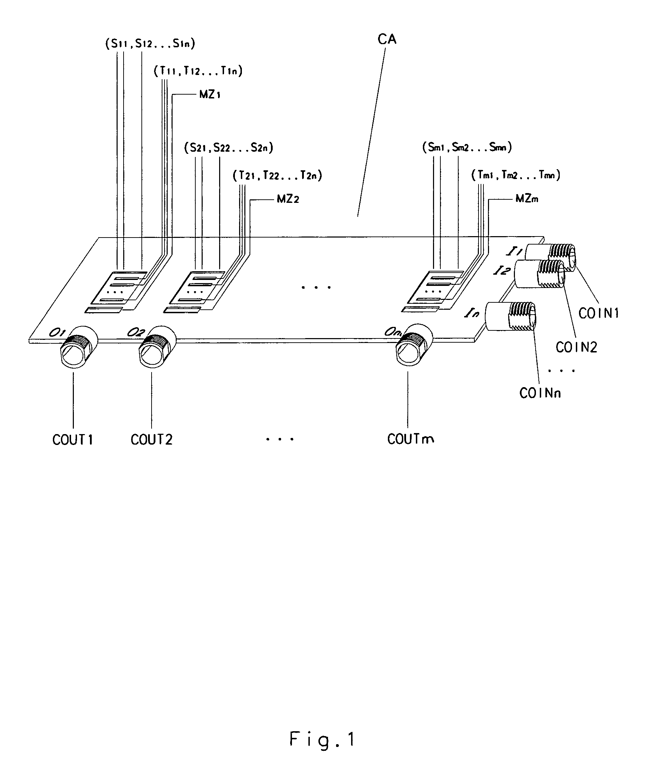

Das erfindungsgemäße System besteht, wie in Figur 1 dargestellt aus einer Schaltung CA mit einer Mehrzahl von n Eingängen I1 ...In, die Telekommunikationssignale aufnehmen, dies sind insbesondere Fernseh-, Rundfunk- und/oder Datendienstsignale. Die Eingänge sind dementsprechend mit Telekommunikationsnetzen (z.B. Internet, GSM), zum Beispiel über Antennen und/oder Kabeln verbunden.

Weiterhin zeigt Figur 1, dass die Schaltung eine Mehrzahl von m Ausgängen 01 ...Om aufweist" über die Signalempfangsgeräte, insbesondere Fernsehempfangsgeräte, Rundfunkempfangsgeräte und/oder Datenempfangsgeräten verbunden werden.

Für jeden Ausgang O1 ... Om ist in der Schaltung CA eine Gesamtheit von Schaltungselementen S11,,, S1n ...Sm1...Smn vorgesehen.

Die Schaltungselemente S11...S1n...Sm1...Smn sind in der Weise ausgestaltet, dass sie aus an den Eingängen (I1...In) anliegenden (z.B. 4) Telekommunikationssignalen ausgangsindividuell (z.B. Ausgang O1) mindestens ein Telekommunikationssignal für diesen Ausgang (hier: O1) oder mehrere Ausgänge (O1 ... Om) auswählen und das mindestens eine ausgewählte Telekommunikationssignal dem entsprechenden Ausgang (hier: O1) oder Ausgängen (O1...Om) zuführen.

Die Schaltungselemente S11...S1n...Sm1...Smn umfassen (mindestens einen) Mischer MZ1, MZ2, ...MZm und mindestens einen Schalter T11... T1n... Tm1...Tmn.

Insgesamt weist jedes Schaltungselement mindestens einem Mischer MZm und mindestens einen Schalter T auf.

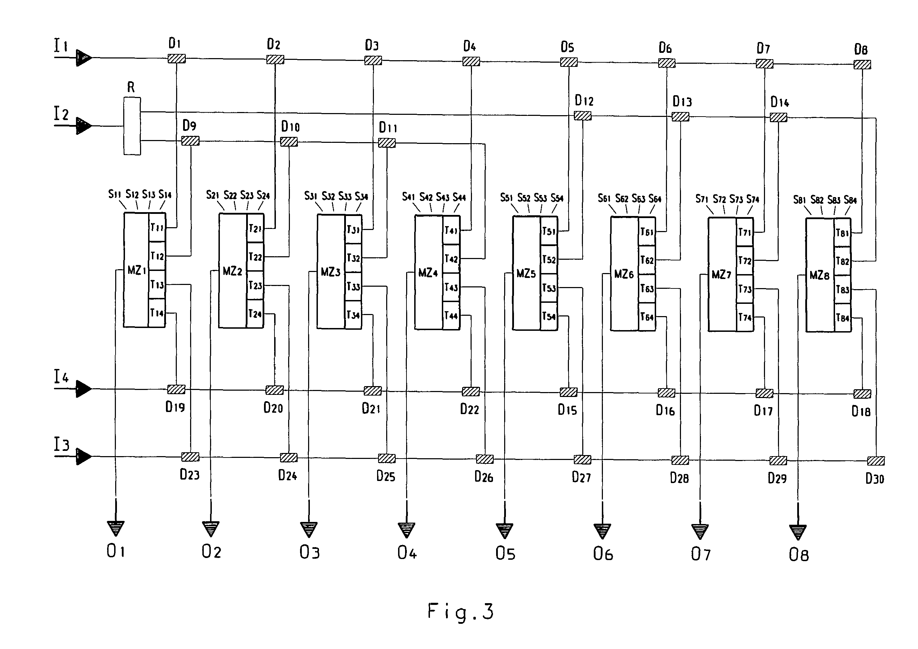

Wie in Figur 3 dargestellt, sind beispielsweise einem Mischer MZ1 vier Schalter T11, T12, T13, T14 zugeordnet.

Die Schalter Tmn wählen abhängig von ihrer Schalterstellung ("EIN" oder "AUS") aus und bestimmen damit, ob ein Signal, das an einem Eingang In anliegt, an einen Ausgang Om durchgeschaltet wird oder nicht.

Weiterhin stellt der Mischer MZ alle von den Schaltern Tm1 ...Tmn ausgewählten Signale zu einer Signalkombination (Signalpaket) zusammen, die dann dem entsprechenden Ausgang Om zugeführt wird.

Durch die vorstehend beschriebene Anordnung wird erzielt, dass an jedem Ausgang 01 ...08 - in Abhängigkeit der ausgangsindividuellen Schalterstellungen ("EIN" oder" AUS") der zugehörigen Schalter T bei z.B. 4 Eingängen I1, 12, I3, I4, an denen jeweils ein Signal anliegt, - eines dieser (Eingangs-) Signale, zwei, drei oder vier dieser (Eingangs-)Signale anliegt.

Betrachtet man den Ausgang 01 in einem Beispielsfall, für den die Schalter T11, T13 und T14 jeweils auf "EIN" geschaltet sind und für den der Schalter T23 auf "AUS" geschaltet ist, so bildet der Mischer MZ1 ein Signalpaket aus den 3 Signalen der Eingänge I1, I3 und 14. Diese 3 Signale liegen dann am Ausgang 01 an.

Wenn zu einem späteren Zeitpunkt auch der Schalter T12 auf "EIN" geschaltet wird, so bildet der Mischer MZ1 ein Signalpaket aus den 4 Signalen der Eingänge I1, I2, I3 und I4. Diese 4 Signale liegen dann am Ausgang 01 an.

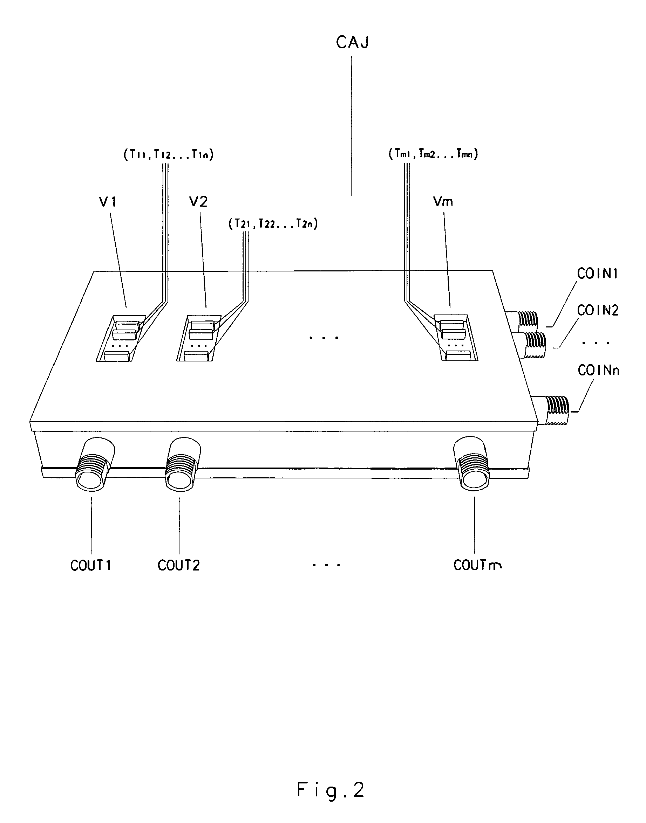

Figur 2 zeigt ein Ausführungsbeispiel einer Box/eines Gehäuses CAJ, in dem das System gemäß der Erfindung angeordnet ist. Das Gehäuse CAJ weist Fenster V1, V2...Vm auf, die einen Zugang zu den Schaltern T11, T12, ...T1n, T21, T22, ...T2n; Tm1, Tm2, ...Tnn geben. Diese Schalter lassen sich manuell betätigen; individuelle Schalterstellungen werden bei dieser Ausführungsform manuell eingestellt; sie lassen sich jedoch in anderen Ausführungsformen des erfindungsgemäßen Systems auch durch Fernbediensignale, die über Telekommunikationsnetze übertragen werden oder von einem Fernbedienungsgeber generiert werden, elektronisch einstellen.

Das Gehäuse weist weiterhin Stecker COIN1, ... COINn auf, die den Eingängen I1, ...In der Schaltung CA entsprechen, sowie Stecker COUT1, ... COUTm, die den Ausgängen O1,...Om der Schaltung entsprechen.

In einem weiteren Ausführungsbeispiel der Erfindung sind die Schaltungselemente S11...S1n...Smn außerhalb des Gehäuses CAJ angeordnet; sie sind in diesem Fall in Steckdosen der Benutzer angeordnet; diese Steckdosen sind zwischen den Signalempfängern, zum Beispiel einem Fernsehsignalempfangsgerät, und dem Gehäuse CAJ angeordnet. Die Schaltungselemente S11...S1n...Sm1...Smn können manuell betätigbar sein oder über externe Telekommunikationsnetze wie zum Beispiel das Internet, GSM, etc. bzw. mittels eines Fembedienungsgebers gesteuert werden.

Figur 3 zeigt beispielshaft ein Blockschaltbild einer Schaltungsanordnung CA mit vier Eingängen I1, I2, I3, I4 und acht Ausgängen O1, O2, O3, O4, O5, O6, O7, O8.

Über die Eingänge I1 und I4 werden zum Beispiel Signale eingespeist, deren Frequenz im Bereich zwischen 5 und 860 MHz liegt, während über den in den Eingang I2 zum Beispiel Signale zwischen 5 und 2300 MHz eingespeist werden; über den Eingang I3 werden zum Beispiel Signale zwischen 950 und 2300 MHz eingespeist.

Das Signal am Eingang I1 wird über acht Ableiter D1, D2, D3, D4, D5, D6, D7, D8 (gleiche Anzahl wie die Anzahl der Ausgänge) den Schaltungselementen S11, S21, S31, S41, S51, S61, S71, S81 zugeführt.

Aus dem Signal am Eingang I2 werden mittels eines Verteilers (Aufteiler) R zwei Signale gebildet, wobei eines dieser Signale über Ableiter D9, D10, D11 den Schaltungselementen S12, S22, S32 zugeführt wird, während das andere der Signale über Ableiter D12, D13, D14 den Schaltungselementen S42, S52, S62, S72 und S82 zugeführt wird.

In analoger Weise zum Signal am Eingang I1 wird das Signal am Eingang I3 (ohne Aufteilung durch einen Verteiler R) über acht Ableiter D23, D24, D25, D26, D27, D28, D29 und D30 den Schaltungselementen S13, S23, S33, S42, S53, S63, S73 und S83 zugeführt.

Schließlich wird das Signal am Eingang I4 mittels Ableiter D19, D20, D21, D22, D15, D16, D17, D18 den Schaltungselementen S14, S24, S34, S44, S54, S64, S74 und S84 zugeführt.

In den Schaltungselementen S11... S81; S12...S82; S13...S83; S14...S84 und mittels der Schalter T11... T81; T12...T82; T13...T83; T14...T84 werden die Signale an den Eingängen I1, 12,13, I4 ausgewählt. Diese werden jedem Mischer MZ1, MZ2, MZ3, MZ4, MZ5, MZ6, MZ7 und MZ8 zugeführt. Am Ausgang eines jeden Mischers MZ1...MZ8 liegen dann die entsprechend ausgewählten und zu Paketen zusammengestellten Signale an. Die an den Ausgängen der Mischer MZ1 ... MZ8 anliegenden Signale werden den Ausgängen 01 ...08 des Systems zugeführt.

An jedem der Eingänge I1 ...In kann jeweils mehr als ein Signal anliegen. Beispielsweise liegt am Eingang I1 eine Mehrzahl von Signalen an, die unterschiedliche Dienste bzw. Programme darstellen. Diese Mehrzahl von Signalen kann wie zuvor beschrieben ausgangsindividuell ausgewählt werden.

### Bezugszeichenliste

| | |
|---|---|
| CA | Schaltung |
| I1...In | Eingänge |
| O1...Om | Ausgänge |
| COIN1...COINn | Eingangsverbindungselemente |
| COUT1...COUTm | Ausgangsverbindungselemente |
| V1...Vm | Zugangsfenster zu den Schaltern |
| S11...S1n;Sm1...Smn | Schaltungselemente |
| MZ1...MZn | Mischer |
| T11...T1n...Tm1...Tmn | Schalter |
| CAJ | Gehäuse |
| V1, ... Vm | Fenster |
| R | Verteiler |
| D1, ... | Ableiter |

## Patentansprüche

1. System zur Verteilung von Telekommunikationssignalen, insbesondere Fernseh-, Rundfunk- und/oder Datensignalen, bestehend aus einer Schaltung (CA) mit n Eingängen (I1 ... In), die mit Telekommunikationsnetzen, insbesondere über Antennen und/oder Kabeln verbunden sind, und mit m Ausgängen (O1 ...Om), an die Signalempfangsgeräte anschließbar sind, insbesondere Fernseh-, Rundfunk- und/oder Datenempfangsgeräte, wobei jeder Ausgang (01 ... Om) mindestens einem Schaltungselement (S11... S1n ...Sm1...Smn) zugeordnet ist,
**dadurch gekennzeichnet,**
**dass** die Schaltungselemente (S11...S1n...Sm1...Smn) in der Weise ausgestaltet sind, dass sie aus an den Eingängen (I1...In) anliegenden Telekommunikationssignalen ausgangsindividuell mindestens ein Telekommunikationssignal für einen Ausgang oder mehrere Ausgänge (01 ... Om) auswählen und das mindestens eine ausgewählte Telekommunikationssignal dem entsprechenden Ausgang oder Ausgängen (O1...Om) zuführen.

2. System nach Anspruch 1, **dadurch gekennzeichnet, dass** jedes Schaltungselement (S11...S1n...Sm1...Smn) mindestens einen Mischer (MZ) und Schalter (T11...T1n...Tm1...Tmn) aufweist.

3. System nach einem der vorstehenden Ansprüche, **dadurch gekennzeichnet, dass** mindestens ein Teil der Schaltungselemente (S11...S1n...Sm1...Smn) in einem Gehäuse (CAJ) angeordnet ist, in dem eine Platine der Schaltung (CA) angeordnet ist.

4. System nach Anspruch 3, **dadurch gekennzeichnet, dass** das Gehäuse (CAJ) mindestens ein Fenster (V1, Vm) aufweist, in dem mindestens ein Teil der Schalter (T11 ...T1n) zugänglich angeordnet ist.

5. System nach Anspruch 1 oder 2, **dadurch gekennzeichnet, dass** die Schaltungselemente (S11...S1n...Sm1...Smn) außerhalb eines Gehäuses (CAJ) angeordnet sind, in dem eine Platine der Schaltung (CA) angeordnet ist.

6. System nach einem der Ansprüche 2 bis 5, **dadurch gekennzeichnet, dass** wenigstens ein Teil der Schalter (T11...T1n...Tm1...Tmn) manuell betätigbar ist.

7. System nach einem der Ansprüche 1 bis 5, **dadurch gekennzeichnet, dass** wenigstens ein Teil der Schalter (T11...T1n...Tm1...Tmn) fernbedienbar ist.

8. System nach Anspruch 7, **dadurch gekennzeichnet, dass** wenigstens ein Teil der Schalter (T11...T1n...Tm1...Tmn) durch Signale aus den Telekommunikationsnetzen steuerbar ist.

9. System nach Anspruch 5, **dadurch gekennzeichnet, dass** mindestens ein Teil der Schaltungselemente (S11...S1n...Sm1...Smn) in Steckdosen integriert ist, die zwischen dem Gehäuse (CAJ) und den Signalempfangsgeräten angeordnet sind.
